Europäisches Patentamt

European Patent Office

Office européen des brevets

(11) Veröffentlichungsnummer: **0 306 688**
**A1**

(19)

(12) ## EUROPÄISCHE PATENTANMELDUNG

(21) Anmeldenummer: 88112199.0

(22) Anmeldetag: 28.07.88

(51) Int. Cl.4: **B23K 7/10**

(30) Priorität: 10.09.87 US 95401

(43) Veröffentlichungstag der Anmeldung:
15.03.89 Patentblatt 89/11

(84) Benannte Vertragsstaaten:
AT BE CH DE ES FR GB GR IT LI LU NL SE

(71) Anmelder: CLEVELAND MACHINE CONTROLS, INC.
7550 Hub Parkway
Valley View Ohio 44125(US)

(72) Erfinder: Griebeler, Elmer L.
9313 Gerald Drive
Streetsboro Ohio 44241(US)

(74) Vertreter: Hennicke, Albrecht, Dipl.-Ing. et al
Patentanwälte Dipl.-Ing. Buschhoff Dipl.-Ing.
Hennicke Dipl.-Ing. Vollbach
Kaiser-Wilhelm-Ring 24 Postfach 190 408
D-5000 Köln 1(DE)

(54) **Vorrichtung zum Steuern des Arbeitsspaltes eines Schneidkopfes und Verfahren zu ihrer Verwendung.**

(57) Die Vorrichtung hat mehrere langgestreckte Fühlelemente (110, 400), die vertikal vom Schneidkopf (10) in Richtung auf das Werkstück (P) herunterhängen und von denen jeder Fühler ein oberes und ein unteres Ende (112, 114) aufweist und wobei Tragvorrichtungen (100) vorgesehen sind, welche die Fühlelemente (110, 400) an ihren oberen Enden (112) tragen, die mit ihrem oberen Ende (112) im Winkelabstand rund um den Schneidkopf (10) angeordnet sind und deren untere Enden (114) sich gegenüber dem unteren Ende (114) des Schneidkopfes (10) auf der gleichen vertikalen Höhe befinden, und wobei Mittel vorgesehen sind, die eine freie Aufwärtsbewegung der unteren Enden (114) gestatten, wenn diese gegen das Werkstück (P) stoßen. Die Fühlelemente können nach unten hängende Ketten (400) oder lose gehaltene starre Stangen sein. Ferner ist eine Regeleinrichtung vorgesehen, die den Motor (M) in einer ersten Richtung antreibt, in der sich der Schneidkopf (10) vom Werkstück (P) aufwärts bewegt und der den Schneidkopf (10) in einer zweiten Richtung bewegen kann, in der sich der Kopf auf das Werkstück (P) absenkt, um den Arbeitsspalt auf einem vorher ausgewählten Wert zu halten.

FIG. 1

## Vorrichtung zum Steuern des Arbeitsspaltes eines Schneidkopfes und Verfahren zu ihrer Verwendung

Die Erfindung betrifft eine Steuervorrichtung für Schneidköpfe und mehr im einzelnen eine Vorrichtung zum automatischen Steuern des Arbeitsspaltes eines Schneidkopfes, beispielsweise eines Schweißbrenners.

Die Erfindung ist insbesondere zum Steuern des Arbeitsspaltes oder der Flammenlänge eines Azetylengasschneidbrenners verwendbar, der sich längs eines metallenen Werkstückes bewegt, um dieses längs einer vorher ausgewählten Linie zu schneiden, und die Erfindung wird unter spezieller Bezugnahme auf einen solchen Schneidbrenner beschrieben. Die Erfindung hat jedoch einen viel breiteres Anwendungsgebiet und kann auch zum automatischen Steuern des Arbeitsspaltes verschiedener Arten von Schneidköpfen, wie Plasmaschneidbrenner, Laserschneidköpfe und andere Schneidköpfe verwendet werden, bei denen ein optimaler, relativ kleiner Schneidspalt oder eine relativ kleine Schneidlänge beibehalten werden soll, um einen optimalen Schnitt zu erzielen, während sich der Schneidkopf während des Schnittes längs des Werkstückes bewegt.

Als Hintergrundinformation wird auf das ältere US-Patent Nr. 3 746 326 von Wirth hingewiesen, in dem das technische Gebiet erläutert ist, auf das sich die vorliegende Erfin dung insbesondere bezieht. Es ist nicht notwendig, diese Hintergrundinformation zu wiederholen, die im Stand der Technik bekannt und in diesem Patent klar erläutert ist.

Beim Schneiden von flachen Metallplatten mit der Flamme eines Schneidbrenners oder eines anderen Schneidkopfes wird der Schneidkopf längs über die Oberfläche einer Platte bewegt und in einem vorher ausgewählten Abstand von dieser Platte gehalten, um optimale Schneidparameter, wie Brennstoffverbrauch, Schnittgeschwindigkeit und Schnittqualität zu erreichen. Zur Optimierung dieser Parameter muß das Ende des Schweißbrenners mit einem vorher ausgewählten Spalt oder Abstand von der Oberseite der zu schneidenden Platte gehalten werden; die Platte ist jedoch nicht gleichförmig, der Schnitt wird in einer verunreinigten Atmosphäre durchgeführt und Oberflächenhindernisse verschiedener Art können in der Schneidlinie liegen, welche den Schweißbrenner beschädigen können, wenn dieser gegen das Hindernis stößt. Unter normalen Umständen werden auch mehrere Schneidköpfe gleichzeitig mit einem einzigen Tragbalken über das Werkstück geführt. Jeder dieser Schneidköpfe muß unabhängig justiert werden, da verschiedene Teile des Werkstückes von den einzelnen Schneidköpfen oder Brennflammen geschnitten werden. Infolgedessen wird mit der Steuerung von mehreren Schneidköpfen oder Schweißbrennern, die mehrere gleichartige Schnitte in einem Werkstück ausführen, dem Bedienungsmann eine enorme Last aufgebürdet. Der Bedienungsmann muß den gewünschten optimalen Arbeitsspalt für jeden einzelnen Schneidkopf, von denen sechs oder mehr Schneidköpfe vorhanden sein können, voraussehen und jeden Schneidkopf separat in vertikaler Richtung verstellen, während sich die Schneidköpfe in Längsrichtung über das Werkstück bewegen. Dies stellt ein gewaltiges Steuerproblem dar, welches eine Handsteuerung erfordert, obgleich jeder Schneidkopf seinen eigenen Motor zum Verstellen der Höhe des Schneidkopfes in vertikaler Richtung gegenüber dem Werkstück aufweist. Jeder dieser Motoren wird von einer separaten Einheit gesteuert, die der Bedienungsmann betätigen muß, um die optimale Flammenlänge oder den optimalen Arbeitsspalt für die Schneidköpfe während ihres Vorschubes über die Oberfläche der zu schneidenden Platte aufrechtzuerhalten.

Ein optimaler Abstand für einen Schneidbrenner liegt relativ nahe über der Oberfläche des Werkstückes und wird bestimmt von dem Material der Platte, der verwendeten Ausrüstung, der Brennstoffzusammensetzung und der Geschwindigkeit, mit der die Schneidköpfe längs der zu schneidenden Oberfläche gehandhabt werden. Solch ein optimal kleiner Arbeitsspalt kann nicht leicht beibehalten werden. Oft entstehen Schnitte schlechter Qualität. In vielen Fällen stößt der Schneidkopf gegen das Werkstück oder wird vom Werkstück genügend weit fortgedrückt, so daß seine Flamme ausgeht. Hierdurch wird der Schnitt unterbrochen, was die bei diesem Fall offensichtlich auftretenden Nachteile nach sich zieht, insbesondere wenn mehrere Schnitte gleichzeitig ausgeführt werden. Die Handsteuerung ist kompliziert, da es unmöglich ist, die jeweiligen Verhältnisse zu beobachten, die von den einzelnen Schneidköpfen durchlaufen werden, und die einzelnen Schneidköpfe gleichzeitig zu handhaben.

Alle diese Nachteile haben dazu geführt, daß normalerweise der Arbeitsspalt auf einen großen Abstand eingestellt wird, wodurch der Brennstoffverbrauch steigt, die Schnittgeschwindigkeit sinkt und wobei man hofft, daß im Weg der sich bewegenden Schneidfackel keine Hindernisse auftreten. Bei dieser Methode wird mit einem großen Schneidabstand ein unzulänglicher Schnitt geführt, der den einzigen Vorteil hat, daß große Unterschiede in der Plattenoberfläche ohne direkte Zerstörung des Schweißbrenners, Unterbrechung der Schnittlinie oder Auslöschen der Flamme gemeistert werden können.

Um diese Nachteile zu vermeiden, wurden viele Jahre lang Anstrengungen unternommen, den Abstand zwischen der Platte und dem Schneidkopf abzutasten, um die Größe des Schneidspaltes automatisch mit einem reversierbaren Motor durch eine automatische Regelung zu steuern, im Gegensatz zur Handsteuerung der Stellmotoren zum Einstellen der vertikalen Höhe der Schneidköpfe. Ein solcher Versuch bedient sich einer Luftrückdruckanordnung, wie sie in dem US-Patent 3 746 326 von Wirth gezeigt ist. Im besten Falle wird hiermit eine Verstellung erreicht, die eine Toleranz von 0,25" (0,635 cm) aufweist, welches im allgemeinen kein geschlossener Regelkreis für den Arbeitsspalt ist. Außerdem hinderte die Hitze, Metallspritzer, heißes Material, Staub und eine verschmutzte Umgebung den Luftsensor daran, eine genaue automatische Steuerung für die vertikale Höhe der Schneidbrenner zur Verfügung zu stellen.

Ein anderer Versuch ging dahin, einen Kondensatorring zu verwenden, der den Schneidbrenner umgab und parallel zum Werkstück angeordnet war. Wenn sich die Kapazität änderte, wurde ein automatischen Steuersignal erzeugt, das die Höhe des Schneidbrenners einstellte. Diese Art der Anordnung hatte jedoch sehr kleine Änderungen in der abgefühlten Kapazität zur Folge. Solche kleinen Änderungen waren schwierig zu erkennen und änderten sich wesentlich infolge der Hitze, des Staubes und des die Kapazität beeinflussenden Fremdmaterials zwischen der Sensorplatte und der Oberfläche des Werkstückes. Diese einzelnen Versuche zur automatischen Steuerung des Arbeitsspaltes oder der Flammenlänge eines Schneidbrenners während dessen Bewegung über eine ebene Platte waren nicht erfolgreich und verhältnismäßig teuer.

Um eine weniger teure Einrichtung herzustellen, wurde vorgeschlagen, Endschalter zwischen dem Schneidkopf oder dem Brennermundstück und dem Werkstück zu verwenden. Ein Schalter sollte die minimale Höhe und ein anderer Schalter die maximale Höhe bestimmen. Es sollte auch ein einzelner Endschalter verwendet werden können. Diese Versuche waren wirkliche Katastrophen. Mechanische Endschalter waren durch Schlacke und andere Hindernisse auf der zu schneidenden Platte schnell zerbrochen oder zerstört. Außerdem konnten diese Endschalter, ebenso wie die Luftrückdruckeinrichtung (air back pressure arrangement) Änderungen in der vertikalen Höhe nur in einer einzigen Richtung wahrnehmen. Da der Schweißbrenner sich in verschiedenen Richtungen bewegen konnte, waren Endschalter im wesentlichen unwirksam, auch wenn sie in der Lage waren, den Härten einer widrigen Umgebung zu widerstehen, was sie jedoch nicht waren.

Insgesamt waren die Versuche zum automatischen Steuern des Arbeitsspaltes eines Schneidbrenners auf einen optimalen Wert durch mechanische, pneumatische und elektrische automatische Regelungen nicht erfolgreich. Außerdem waren sie teuer, für eine genaue Steuerung nicht geeignet und der Zerstörung durch die rauhe Umgebung ausgesetzt. Infolgedessen wird auch jetzt noch Handsteuerung vorgezogen, obgleich verschiedene Versuche gemacht wurden, den Arbeitsspalt automatisch zu steuern.

Die Erfindung vermeidet die Nachteile der bisher verwendeten automatischen Steuerungen zum Aufrechterhalten des Arbeitsspaltes in einem Schneidkopf, während sich dieser in Längsrichtung über eine zu schneidende Platte bewegt. Sie schafft eine automatische Steuerung für den Schneidspalt, die preiswert herzustellen und dauerhaft im Gebrauch ist und die in der Lage ist, den Schneidspalt, die Flammenlänge oder einen anderen Arbeitszustand eines Schneidkopfes mit einer niedri gen Toleranz von etwa 0,050" (0,127 cm) auf beiden Seiten eines vorher ausgewählten Optimalwertes zu steuern.

Nach der Erfindung ist eine Vorrichtung zum automatischen Steuern des vertikalen Arbeitsabstandes zwischen dem unteren Ende eines Schneidkopfes, beispielsweise eines Schneidbrenners, und einem im wesentlichen flachen Werkstück oder einer Platte unter dem Schneidkopf vorgesehen, während der Schneidkopf und das Werkstück relativ zueinander bewegt werden, wobei der Schneidkopf längs des Werkstückes oder der Metallplatte in einer vorgegebenen Schneidlinie bewegt wird. Normalerweise hat diese Art Vorrichtung einen Antriebsmotor zum Hin- und Herbewegen des Schneidkopfes gegenüber dem Werkstück oder der Platte während der Relativbewegung des Schneidkopfes längs der Schneidlinie. In Übereinstimmung mit der vorliegenden Erfindung hat die Vorrichtung mehrere langgestreckte Fühler, die frei beweglich von dem Schneidkopf vertikal in Richtung auf das Werkstück herabhängen. Jeder dieser Fühler hat ein oberes und ein unteres Ende. Ein Stützmittel oder Rahmen ist an dem Schneidkopf befestigt und hält die Fühler an ihren oberen Enden fest, die im Winkelabstand voneinander rund um den Kopf angeordnet sind, wobei sich die unteren Enden aller Fühler gegenüber dem unteren Ende des Schneidbrenners oder Schneidkopfes alle auf der gleichen vertikalen Höhe befinden. Diese herabhängenden Fühler sind so konstruiert, daß ihre unteren Enden sich frei nach oben bewegen können, wenn sie auf das Werkstück treffen. Dies wird bei der Verwendung der bevorzugten starren langgestreckten Fühlelemente dadurch erreicht, daß die Fühlelemente im Tragrahmen derart lose gehalten werden, daß sie sich aufwärtsbewegen oder vor- und zurückschwingen können.

Bei einer anderen Ausführungsform der Erfindung sind die Fühlelemente in Querrichtung flexi-

bel und beispielsweise al. nach unten hängende Ketten ausgebildet. Ohne Rücksicht darauf, welche Art von Fühlelementen verwendet wird, haben ihre unteren Enden immer die gleiche Höhe in bezug auf den Schweißbrenner, um die äußerste Stellung des Schneidbrenners gegenüber der zu schneidenden Platte zu steuern.

Nach einem weiteren Merkmal der Erfindung ist eine automatische Regeleinrichtung vorgesehen, die den Motor in einer ersten Richtung antreibt, um den Schneidkopf vom Werkstück weg nach oben zu heben und in einer zweiten Richtung anzutreiben, um den Schneidkopf in Richtung auf das Werkstück abzusenken, derart, daß ein Arbeitsspalt von einer vorher ausgewählten Größe aufrechterhalten wird. Der Ausdruck "vorher ausgewählte Größe" bedeutet einen Wert, nach dem gesteuert wird, um einen vorbestimmten Abstand mit einer Maximum- und einer Minimumtoleranz in Übereinstimmung mit der Standardmethode einzuhalten.

Die Regeleinrichtung nach der Erfindung hat eine Sensoreinrichtung, die alle Fühler im Abstand vom Werkstück hält, während das untere Ende desjenigen Fühlers, welcher der Platte am nächsten ist, in einem vorher ausgewählten Abstand vom Werkstück gehalten wird. Der Abstand des der Platte nächsten Fühlers wird gesteuert, um den Arbeitsspalt zu steuern. Während des Schneidvorganges tritt zu jeder vorgegebenen Zeit ein Wechsel unter den gesteuerten Fühlern ein, derjenige besondere Fühler zu sein, der der Platte am nächsten ist. Auf diese Weise bewegen sich die frei herabhängenden Fühler über die Platte, während der Schneidkopf die Platte längs schneidet.

Durch die automatische Regeleinrichtung versuchen die Antriebsmotoren, alle Fühler abwärts in Berührung mit dem Werkstück zu bringen; es wird jedoch derjenige Fühler, der gegen das höchste Hindernis oder die Oberfläche der Platte stößt, zu einem Steuerelement. Dieser Fühler wird gesteuert, um einen vorher ausgewählten Abstand von der Platte einzu halten. Da sich die Fühler zusammen mit dem Schneidbrenner bewegen, werden verschiedene Fühler zu Steuerfühlern, die den automatisch aufrechtzuerhaltenden "vorher ausgewählten Abstand" vom Werkstück haben. Auf diese Weise werden alle Fühler gegenüber der zu schneidenden Platte in einer tiefsten Stellung gehalten, wobei ein nicht näher bestimmter Fühler, der auf die höchste Stelle der Fläche trifft, einen vorher ausgewählten, gesteuerten Abstand hat.

Um dieses weiter oben erläuterte Ziel zu erreichen, werden die einzelnen Fühler oder Fühlelemente parallel an eine Ultrahochspannung angelegt, so daß derjenige Fühler, der dem Werkstück am nächsten ist, eine ionisierte Dauerentladung oder Corona-Entladung zwischen der Platte oder dem Werkstück und dem Ende des Fühlelementes erzeugt. Um eine Corona-Entladung bei der ultrahohen Spannung, die in der Praxis 2 - 5 kV übersteigt und vorzugsweise bei 10 kV liegt, aufrechtzuerhalten, ist in der Nähe des unteren Endes des Fühlelementes ein Widerstand eingebaut, um eine ununterbrochene Entladung zu erreichen anstelle einer abrupten Funkenentladung, wenn eine Spitze oder ein Ende eines der Fühlelemente auf das Werkstück trifft.

Die Fühleinrichtung arbeitet auch ohne diesen Widerstand. Wenn die Fühler sich abwärtsbewegen, stößt jedoch einer gegen den höchsten Punkt der flachen Platte und erzeugt einen Funken. Dieser Funke wird dann derart erfaßt, daß die Fühler durch Anheben des gemeinsamen Tragrahmens mit dem Steuermotor aufwärtsbewegt werden. Sobald diese Aufwärtsbewegung den Lichtbogen auslöscht, beginnt eine Abwärtsbewegung, bis der nächste Lichtbogen von einem Fühler gezündet wird, der den nächsthöchsten Bereich der Platte erreicht. Durch Verwendung einer ultrahohen Spannung ist der Einfluß der Atmosphäre auf die Arbeitscharakteristiken der Fühler vernachlässigbar. Solch eine Hochspannung arbei tet genau durch Staub, Hitze, Spritzer und andere Verunreinigungen, die beim Schneiden einer Metallplatte entstehen.

Nach einem weiteren Merkmal der Erfindung wird ein elektrisches Merkmal der Fühlelemente, die den Corona- oder Entladungseffekt oder eine Funkenentladung messen, gemessen und mit einem Referenzwert verglichen, so daß der Antriebsmotor aufwärts- oder abwärtsbewegt wird, um die Fühlelemente in einer Stellung zu halten, in der sie im allgemeinen über die Oberfläche der zu schneidenden Platte hinwegstreichen. Im Fall einer Corona- oder Glimmentladung, die, wie oben erläutert wurde, bevorzugt wird, kann der Hochspannungsgenerator überwacht werden, um die Leistung, die Spannung oder den Strom zu überwachen, welcher elektrische Wert mit einem Referenzwert verglichen wird, um den Schneidkopf in vertikaler Richtung anzutreiben und eine vorher ausgewählte Corona- oder Glimmentladung zwischen einem der Fühlelemente und dem Werkstück aufrechtzuerhalten. Das Leistungsvermögen des Hochspannungsgenerators ist ausreichend, um nur eine einzige Corona- oder Glimmentladung aufrechtzuerhalten. Infolgedessen arbeitet jeweils nur ein einziges Fühlelement als Steuerorgan.

Wenn das Funkenkonzept benutzt wird, das eine Alternative hierzu darstellt, wird ein Funke ermittelt. Dies führt dann zu einem Zurücksetzen des Motors, bis der Funke ausgelöscht ist. Dies führt dann wieder zu einer Abwärtsbewegung, bis der nächste Funken zwischen dem Fühler und dem Werkstück erzeugt wird, der eine Aufwärtsbewegung zur Folge hat. Diese Wirkung hält den Schneidkopf auf seinem niedrigsten optimalen Abstand von der zu schneidenden Platte. Diese abwechselnde Funkenbildung wird als Schritt des Vergleichs eines Hinweiswertes für den Funkenzustand mit dem ermittelten Funkenzustand an den Enden der Fühlelemente betrachtet.

Nach der Erfindung wird der tiefste Fühler mit der Corona-oder Glimmentladung bei einem einstellbaren, vorher ausgewählten Abstand in der Größenordnung von 0,05 - 0,30" (0,0125 - 0,762 cm) gehalten. Hierbei ist es möglich, in jeder Richtung des vorher ausgewählten, eingestellten Abstandes eine Toleranz des Abstandes der Steuerfühler von der Platte von etwa 0,05" (0,0127 cm) einzuhalten. Infolgedessen wird die Flammenlänge oder der Arbeitsspalt der Schneidvorrichtung im Betrieb innerhalb dieser relativ kleinen Toleranz gehalten. Bei den Schneidvorrichtungen nach dem Stand der Technik arbeiten automatische Regelvorrichtungen im allgemeinen · nur in einem Bereich von etwa 0,25" (0,635 cm) auf jeder Seite des automatischen Steuerpunktes oder des eingestellten Abstandpunktes. Aus diesem Grunde mußten die bekannten Vorrichtungen automatisch auf einen relativ großen Abstand eingestellt werden, obgleich dieser hohe Abstand nicht das Optimum für einen wirtschaftlichen und wirkungsvollen Schnitt darstellt.

Nach einem weiteren Merkmal der Erfindung sind mindestens drei Fühlelemente um den Schneidkopf herum angeordnet, um nach oben vorstehende Hindernisse an verschiedenen Stellen der Plattenoberfläche zu erfühlen, während der Schneidkopf sich in verschiedenen Richtungen über die Platte bewegt. Diese Fühlelemente werden von einem Tragrahmen getragen, der die Fühlelemente in gleichem radialen Abstand vom Schneidkopf derart hält, daß während der Bewegung des Schneidkopfes in verschiedenen Richtungen die gleiche Empfindlichkeit vorhanden ist. In der Praxis werden sechs Fühler verwendet und sie haben alle in Umfangsrichtung rund um den Schneidkopf den gleichen Abstand voneinander, um eine in allen Richtungen wirksame Steuerung zu gewährleisten. Wie oben erwähnt, wird eine Corona-Entladung nur bei demjenigen Fühler hervorgerufen, der auf den höchsten Vorsprung auf der Oberfläche der zu schneidenden Platte trifft. Da sich die Fühler längs der Platte bewegen, wechselt die Corona-Entladung von einem Fühler zum anderen, da verschiedene Fühler auf verschiedene Flächenveränderungen treffen. Zu jedem gegebenen Zeitpunkt gibt es nur eine Corona-Entladung. Wenn ein Fühler gegen das Werkstück stößt, sind die Fühler so befestigt oder konstruiert, daß ein solcher Zusammenstoß weder die Fühler noch den Schneidbrenner beeinträchtigt. Das Auftreffen eines Fühlers auf die Platte erzeugt eine Bewegung des Schneidkopfes von der Platte weg, bis die Corona-Entladung wieder vorhanden ist.

Die Erfindung betrifft ferner ein Verfahren zum Betrieb der oben erwähnten Vorrichtung zum automatischen Steuern des vertikalen Arbeitsabstandes zwischen dem unteren Ende des Schneidkopfes und der im allgemeinen ebenen, zu schneidenden Platte. Ferner ist nach einem weiteren Merkmal der Erfindung die Fühleinrichtung am Tragrahmen eine separate Sensoreinheit zum Regeln des vertikalen Abstandes zwischen dem unteren Ende des Schneidkopfes und dem zu schneidenden Werkstück.

Obgleich die Erfindung besonders geeignet ist zum Regeln des Arbeitsabstandes eines Schneidhauptes, kann die Fühleinrichtung doch auch zum Einhalten des Vertikalabstandes irgendeiner Einrichtung verwendet werden, die oberhalb einer flachen, elektrisch leitenden Metallfläche angeordnet ist, während diese Einrichtung sich längs über diese flache Oberfläche bewegt.

Hauptziel der vorliegenden Erfindung ist es, eine Vorrichtung zum automatischen Steuern des Arbeitsabstandes eines Schneidhauptes zu schaffen, mit der ein optimaler Abstand für einen wirtschaftlich durchführbaren und qualitativ hochwertigen Schnitt für lange Zeiten unter schwierigen Bedingungen mit verhältnismäßig geringen Toleranzen aufrechterhalten wird.

Ein weiteres Ziel der Erfindung besteht darin, eine Vorrichtung zum Regeln des Arbeitsabstandes eines Schneidkopfes zu schaffen, die nicht nur in einer Richtung brauchbar und verhältnismäßig preiswert ist und die leicht an vorhandenen Schneidköpfen, wie beispielsweise Schneidbrennern, montiert werden kann.

Ein weiteres Ziel der Erfindung ist es, eine Vorrichtung der oben näher erläuterten Art zu schaffen, die bei der normalen automatischen Regelung im wesentlichen ohne Kontakt zwischen Vorrichtung und Platte über diese hinweggleitet.

Ein weiteres Ziel der Erfindung ist es, die oben näher erläuterte Vorrichtung so auszubilden, daß sie in der Lage ist, mehrere Schneidköpfe bei einem Mehrfachschnitt in einer Weise zu steuern, daß die Steuerung für den Motor für Hin- und Herbewegung eines jeden Schneidkopfes oder Schneidbrenners von einem individuellen Modul an jedem Kopf gesteuert wird, wobei dieser Modul leicht auswechselbar sein soll, um eine schnelle Reparatur ohne Zerlegung der Gesamteinrichtung durchführen zu können.

Ein weiteres Ziel der Erfindung ist die Angabe des Verfahrens zum Verwenden der oben näher erläuterten Vorrichtung und der Vorschlag für eine Unteranordnung, die den Tragrahmen und die Fühlelemente oder die Fühlelemente selbst zum Gegenstand hat, welche in einer oben näher erläuterten Vorrichtung gebraucht werden.

Weitere Merkmale und Vorteile der Erfindung ergeben sich aus der anschließenden Beschreibung und den Zeichnungen, in denen bevorzugte Ausführungsformen der Erfindung näher erläutert sind. Es zeigt:

Fig 1 eine bildliche Darstellung von zwei Schneidbrennern, welche die bevorzugte Ausführungsform der vorliegenden Erfindung benutzen,

Fig 2 eine vergrößerte Seitenansicht, im wesentlichen längs Linie 2-2 der Fig. 1,

Fig 3 eine vergrößerte Teildarstellung, die den Querschnitt im wesentlichen längs Linie 3-3 der Fig. 4 zeigt,

Fig 4 eine vergrößerte Grundrißdarstellung im wesentlichen nach Linie 4-4 der Fig. 2, die einen Teil im Querschnitt zeigt und zu der ein schematisches Blockdiagramm der Regeleinheit gehört, die bei der bevorzugten Ausführungsform nach der Erfindung benutzt wird,

Fig 5 bis 8 schematische Seitenansichten, die charakteristische Arbeitsstellungen der bevorzugten Ausführungsform der Erfindung erläutern,

Fig 9 eine schematische Darstellung von Merkmalen, die bei einem Fühlelement vorhanden sind, das in Übereinstimmung mit der bevorzugten Ausführungsform der Erfindung konstruiert und mehr im einzelnen dargestellt ist als in Fig. 3,

Fig. 10 eine der Fig. 9 entsprechende schematische Darstellung, die eine abgewandelte oder alternative Art eines Fühlelementes zeigt, das bei der praktischen Durchführung der vorliegenden Erfindung verwendet werden kann,

Fig. 11 eine graphische Darstellung, welche die allgemeine Arbeitscharakteristik des bei dem alternativen, schematisch in Fig. 10 dargestellten Fühlertyps verwendeten Systems zeigt, und

Fig. 12 und 13 den Fig. 5 bis 8 ähnliche schematische Darstellungen, welche die Arbeitscharakteristika eines Systems zeigen, welches die schematisch in Fig. 10 dargestellten alternativen Fühler verwendet.

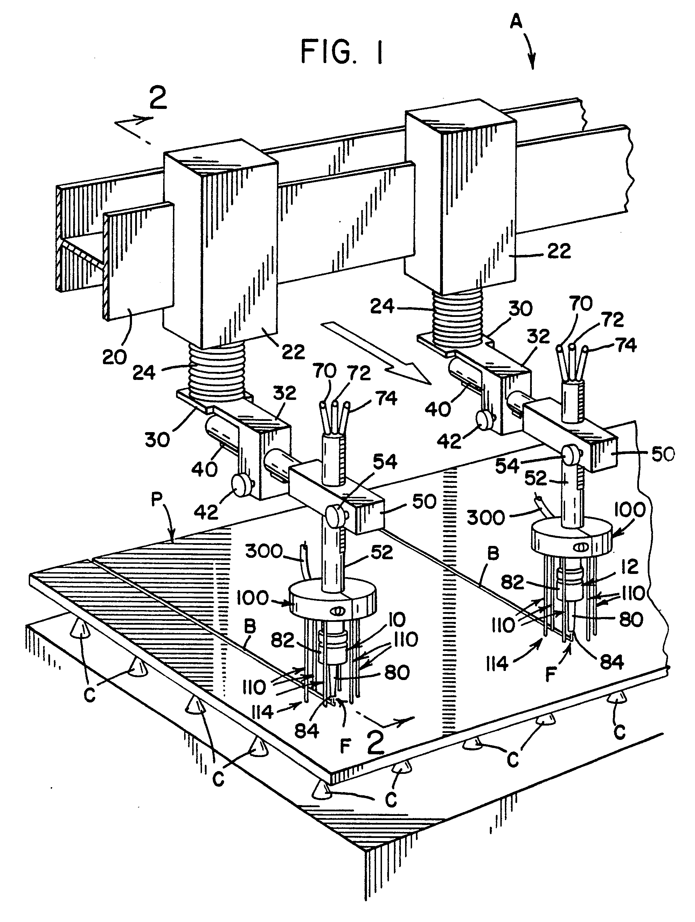

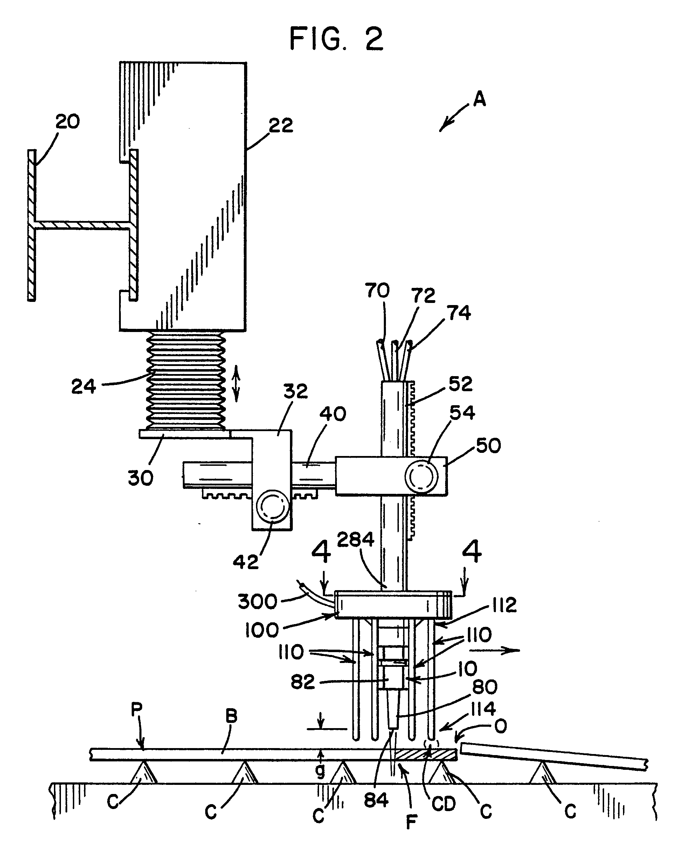

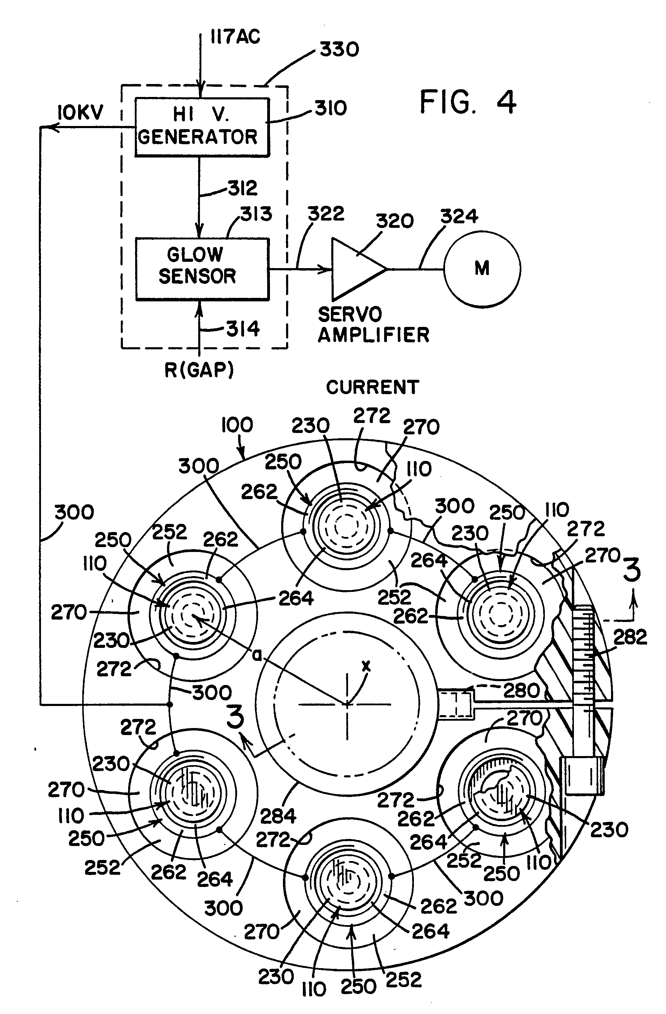

In den Fig. 1 und 2 ist eine Maschine A dargestellt, mit der mehrere Schlitze B in eine Metallplatte P geschnitten werden können, die auf mehreren, im allgemeinen konischen, gußeisernen Füßen C ruht, wie dies an sich bekannt ist. Auf einem gemeinsamen Tragbalken 20 sind mehrere Schneidköpfe 10, 12 in Form von Gasschneidbrennern in einer geeigneten Anordnung montiert, die schematisch als Gehäuse 22 dargestellt sind, von denen in jedem ein Motor, beispielsweise der in Fig. 4 dargestellte Motor M, untergebracht ist. Um die Schlitze B herzustellen, bewegt die Schneidmaschine A die Schneidköpfe dadurch gemeinsam, daß sie den Tragbalken 20 über die im allgemeinen flache Oberfläche der Platte P bewegt. Wie üblich, schützen Faltenbälge 24 eine Steuerwelle, die vom Motor M angetrieben wird, um den Schneidkopf 10 bzw. 12 in vertikaler Richtung auf die Platte P zu oder von dieser weg zu bewegen und hierdurch die Höhe eines jeden Schneidkopfes 10 bzw. 12 einzustellen. Jeder Schneidkopf bewegt sich für sich in einer vertikalen Richtung, um verschiedene Buckel und Hindernisse in der Schneidlinie zu kompensieren.

Bei der dargestellten Ausführungsform ist die im Inneren des Faltenbalges 24 untergebrachte Welle an eine Konsole 30 angeschlossen, die einen sich nach außen erstreckenden Lagerblock 32 aufweist, mit dem eine Zahnstange 40 im Lagerblock 32 in einer horizontalen Ebene hin- und hergeschoben werden kann. Ein Knopf 42 kann mit einem Zahnritzel und einer Feststellvorrichtung versehen sein, um die Zahnstange 40 in einer bestimmten Stellung am Lagerblock 32 festzulegen. In ähnlicher Weise ist in einem Lagerblock 50 eine zweite, auf-und abbewegliche Führungsstange 52 geführt, welche die Schneidköpfe 10 bzw. 12 in Vertikalrichtung bewegt. Der Knopf 54 verriegelt die Zahnstange 52 im Lagerblock 50 in einer vorher ausgewählten vertikalen Stellung. Die Lagerblöcke und Zahnstangeneinrichtungen erlauben es, die einzelnen Schneidköpfe in bezug auf die Konsole 30 zu verstellen, wenn solch eine Verstellung erforderlich ist. Diese Konstruktionen werden ihrer Natur nach erläutert und sind kein Teil der vorliegenden Erfindung. Tatsächlich könnten die Schneidköpfe auch unmittelbar auf der Platte 30 ohne die Feineinstellvorrichtungen montiert sein, die schematisch in den Fig. 1 und 2 dargestellt sind.

Wendet man sich nun den Schneidköpfen 10 und 12 zu, so erkennt man, daß normalerweise mehrere dieser Köpfe auf dem Tragbalken 20 befestigt werden, auch wenn dort nur zwei dargestellt sind. Da alle diese Schneidköpfe zusammen mit ihren Tragkonstruktionen, Betätigungsvorrichtungen und in ihrem Gebrauch nach der Erfindung identisch sind, wird nur der Schneidbrenner 10 im einzelnen beschrieben, und diese Beschreibung gilt auch in gleicher Weise für alle anderen Schneidköpfe, die auf dem Tragbalken gelagert sind, um mehrere parallele Schlitze B auszuführen.

Der Schneidkopf 10 hat zwei Gasleitungen 70 und 72 und eine elektrische Steuerleitung 74, so daß dem Schneidkopf Azetylengas und Sauerstoffgas zusammen mit dem geeigneten Zündstrom zugeführt werden können. Der Schneidkopf 10 hat eine sich nach unten erstreckende, auswechselbare Spitze oder Düse 80, die mit einem mit Gewinde versehenen Kragen 82 am Schneidkopf derart befestigt ist, daß das unterste Ende 84 der Düse 80 sich in einem Abstand oder Spalt $g$ von der Oberfläche der Platte P befindet. Der Abstand oder Spalt $g$ wird als "Flammenspalt" oder "Flammenlänge" der Brennerflamme F bezeichnet, obgleich die Flamme sich offensichtlich nach innen durch den Schlitz hindurch erstreckt. Der Schneidvorgang muß nicht notwendigerweise eine Flamme einbegreifen.

Nachdem der Schneidvorgang begonnen hat, kann er im allgemeinen durch Zufuhr von Sauerstoff aufrechterhalten werden. Der Ausdruck "Flammenlänge" deutet jedoch auf den Arbeitsspalt hin, worunter man den Abstand g zwischen der Spitze 84 und der Oberseite der Platte P versteht. Dieser Abstand hat für das jeweils zu schneidende spezielle Metall einen optimalen Wert, bei dem der Brennstoff- und Sauerstoffverbrauch bei zugleich höchster Schnittgeschwindigkeit optimiert werden.

Wie weiter oben beschrieben wurde, versetzt eine Handsteuereinrichtung für den Motor M einen Bedienungsmann in die Lage, den Arbeitsspalt zu beobachten und die Konsole 30 in Vertikalrichtung zu bewegen und hierdurch den Spalt g auf einer gewünschten Größe zu halten, die normalerweise nicht das Optimum ist. Wenn ein in Fig. 2 dargestelltes Hindernis O erreicht wird, bewegt der Bedienungsmann den Schneidbrenner abrupt aufwärts, indem er die Schneiddüse durch eine Aufwärtsbewegung der Konsolplatte 30 nach oben zieht. Dies ist kein normaler Vorfall, die Werkstückplatte ist jedoch wellig, biegt sich durch die Hitze und ändert ihre vertikale Lage, nachdem Schnitte durchgeführt wurden, so daß die obere Oberfläche nicht eben ist und wesentliche Korrekturen der Höhe der einzelnen Schneidbrenner erforderlich sind, um einen vorher ausgewählten Schneidspalt g für jeden Schneidbrenner aufrechtzuerhalten, während sich diese Schneidbrenner gemeinsam längs der oberen Oberfläche der Platte P bewegen.

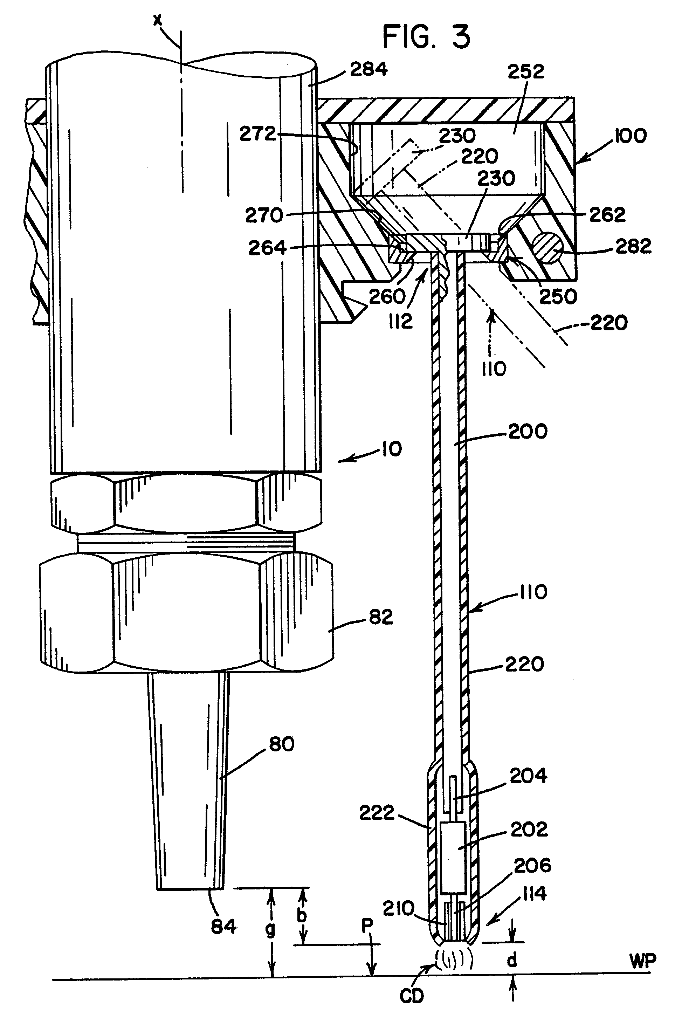

Die vorliegende Erfindung bezieht sich auch auf eine Sensoreinheit zum Steuern des Abstandes g mit verhältnismäßig engen Toleranzen, wobei ein Ultrahochspannungssensor verwendet wird, der einen geeigneten Träger oder Rahmen 100 für mehrere, frei nach unten hängende oder baumelnde Fühler oder Fühlelemente 110 trägt, die obere Enden 112 und untere Sensorenden 114 haben. Die Fühler sind langgestreckte, elektrisch leitende Elemente, wie sie mehr im einzelnen in den Fig. 3 und 4 dargestellt sind. Der Tragrahmen 100 hat die Form eines kreisförmigen Tragringes oder Tragrahmens, der aus Isoliermaterial hergestellt ist und mehrere Fühler 110 trägt, die in Umfangsrichtung im Abstand voneinander eine Düse oder Spitze 80 umgeben, wie dies am besten in Fig. 4 dargestellt ist. In der Praxis werden sechs Fühler 110 verwendet, es könnten jedoch auch Fühler in verschiedener Zahl verwendet werden, ohne den Rahmen und den Geist der vorliegenden Erfindung zu verlassen. Da die Fühler 110 identisch sind, soll nur ein Fühler im einzelnen beschrieben werden und diese Beschreibung soll in gleicher Weise für die anderen Fühler gelten, die von dem Tragring oder Tragrahmen 100 nach unten herabhängen.

Die Fühler befinden sich mit dem Werkstück P in einem elektrischen Stromkreis, der ein ultrahohes Spannungspotential von mindestens 2 - 5 kV und vorzugsweise etwa 10 kV hat. Um diesen elektrischen Stromkreis zu schließen, wird der Fühler 110 von einem langgestreckten, leitenden Element 200 gebildet, wie dies in Fig. 3 dargestellt ist. In der Nähe des Sensorendes 114 und am unteren Ende des leitenden Elementes 200 ist ein Widerstandselement 202 mit hohem Widerstand angeordnet, das Zuleitungen 204 und 206 aufweist, um diesen Widerstand mit dem Hochspannungskreis in Reihe zu schalten. Unter dem Widerstand bildet die leitende Spitze 210 das Sensorende 114 des Fühlers 110. In der praktischen Ausführung hat der Widerstand 202 eine axiale Länge von annähernd 0,4" (1,03 cm). Die Spitze 210 hat eine Länge von annähernd 0,15" (0,386 cm). Bei dieser Ausführungsform ist der Widerstand am Ende des Fühlers angeordnet, um die Entstehung eines Funkens zu verhindern, wenn das Ende oder die Spitze 210 auf die Platte P stößt. Bei demjenigen Fühler, der dem Werkstück oder der Platte am nächsten kommt, entsteht eine ununterbrochene Corona-Entladung zwischen dem Ende der Spitze 210 und der Oberfläche der Platte P.

Bei der bevorzugten Ausführungsform der Erfindung ist der Strom oder die Energie, die notwendig ist, eine Corona-Entladung zwischen dem Ende eines Fühlers und der Oberfläche der Platte zustandezubringen, gerade so groß, daß nur jeweils eine Corona-Entladung stattfinden kann. Diese Corona-Entladung wird als Meßparameter zum Aufrechterhalten des vorher ausgewählten Abstandes d verwendet, wie dies in Fig. 3 dargestellt ist, indem die elektrischen Eigenschaften der einzelnen Corona CD gemessen werden, die unter dem jeweiligen Fühler sich befindet, der der Oberfläche der Platte P am nächsten ist. In der Praxis hat der Widerstand 202 20 MΩ und eine Belastbarkeit von 0,5 W. Zwischen einem der Fühler 110 und dem Werkstück gibt es jeweils nur eine Corona-oder Glimmentladung CD. Die elektrischen Eigenschaften dieser Corona- oder Glimmentladung CD ändern sich je nach der Länge der Entladung. Eine dieser Eigenschaften kann für eine vollautomatische Regelung überwacht werden, die den Motor M zum Einstellen und Aufrechterhalten des geregelten Abstandes g zwischen dem Ende 84 der Spitze oder der Düse 80 und der Platte P steuert.

Um eine Fremdentladung zu verhindern, ist das Fühlelement 200 mindestens auf einem Teil seiner Länge mit einem Isolierüberzug 220 versehen, der in der Nähe der Spitze 210 einen knollenförmig ausgeweiteten Teil 222 aufweist, der den Widerstand 202 umgibt, wie dies in Fig. 3 dargestellt ist. Bei der bevorzugten Ausführungsform besteht das leitende Fühlelement 200 aus Stahl, es kann jedoch auch aus einem anderen leitenden Material, beispielsweise aus Kupfer, hergestellt sein. Zum Aufhängen des Fühlelementes 110 im Tragrahmen oder Tragring 100 dient ein oberes Kopfstück 230 von im wesentlichen kreisförmiger Gestalt.

Wie aus Fig. 4 hervorgeht, sind in dem Tragrahmen oder Tragring 100 mehrere, in Umfangsrichtung im Abstand voneinander angeordnete Ringe oder Kappen 250 aus leitendem Material angeordnet, die um die Achse x im Winkelabstand angeordnet sind, die mit der in Auf- und Abschiebrichtung verlaufenden Mittelachse der Spitze 80 zusammenfällt. Die Kappen 250 haben in radialer Richtung einen vorgegebenen Abstand a von der Achse x und haben bei der bevorzugten Ausführungsform der Erfindung, wie sie in Fig. 4 dargestellt ist, den gleichen Abstand in Umfangsrichtung. Die Anzahl der Fühler kann geändert werden. Jeder Fühler ist jedoch in einer leitenden Kappe oder einem leitenden Ring 250 des Tragrahmens 100 gelagert. Hierbei liegt es im Bereich der Erfindung, daß um den Ring 100 herum mehrere Kappen vorgesehen sind, daß jedoch nicht alle Kappen mit Fühlern 110 besetzt sind. Mit anderen Worten: Sechs Aufnahmen oder Kappen 250 können auch mit nur drei oder vier Fühlern besetzt sein.

Die Kappen 250 sind alle gleich. Deshalb wird nur eine von ihnen im einzelnen beschrieben und diese Beschreibung gilt in gleicher Weise für die anderen Kappen.

Die leitende Kappe 250 ist aus einem leitenden Material, wie beispielsweise aus Kupfer oder Stahl, herausgearbeitet und hat eine konische, untere Öffnung 260 und eine konische obere Schulter 262, die durch eine flache, nach oben gerichtete Kontaktfläche 264 getrennt sind. Die Kopfplatte 230 ruht auf der Kontaktfläche 264 und das Fühlelement 200 hängt nach unten, wobei durch das Gewicht des Fühlers der Berührungsflächenkontakt zwischen der Unterfläche der Kopfplatte 230 und der nach oben gerichteten Kontaktfläche 264 der Leiterkappe 250 aufrechterhalten wird. Oberhalb der Kappe 250 befindet sich in dem Isoliermaterial des Tragrahmens oder Tragringes 100 ein Bewegungsspielraum 252. Dieser Bewegungsraum hat eine sich konisch erweiternde Fläche 270, welche mit der Schulter 262 fluchtet und nach außen in einer zylindrischen Bohrung 272 endet, so daß das Fühlelement 110 aus seiner in Fig. 3 dargestellten Arbeitsstellung in eine in Fig. 3 in strichpunktierten Linien dargestellte extreme Schwenkstellung bewegt werden kann, wobei eine vertikale Aufwärtsbewegung des Endes 114 ebenso möglich ist wie eine erhebliche Schwenkung in Querrichtung. Infolgedessen kann das nach unten hängende oder herabbaumelnde Fühlelement 110 nicht beschädigt werden, wenn es gegen Hindernisse stößt, von denen ein Hindernis O in Fig. 2 angedeutet ist. Wenn also das untere Ende 114 gegen die Platte P stößt, kann es sich nach oben bewegen. Durch diese Aufwärtsbewegung wird der hochgespannte elektrische Stromkreis, in dem sich das Fühlelement befindet, durch Abheben des Fühlers von der Oberfläche 264 abgeschaltet. Zusätzlich kann das Ende 114 des Fühlelementes in allen Richtungen bewegt werden, ohne daß hierbei das herunterhängende Fühlelement beschädigt wird.

Obgleich die Abmessungen der Kappe 250 und des Bewegungsraumes 252 für die Erfindung keine Rolle spielen, sei doch darauf hingewiesen, daß in der praktischen Ausführung die Kopfplatte 230 einen Durchmesser von 0,35" (0,89 cm) hat, während die Innenwand am Innenrand der Schulter 262 einen Durchmesser von 0,40" (1,02 cm) aufweist. Der Außendurchmesser der Schulter 262 beträgt 0,50" (1,27 cm). Die untere Öffnung 260 der Kappe 250 hat einen Durchmesser von 0,25" (0,636 cm), während der Durchmesser des Fühlelementes 0,1" (0,254 cm) beträgt. Der Isolierüberzug 220 kann sich bis zum oberen Ende des Fühlelementes 200 erstrecken. Mit diesen Abmessungen können sich die einzelnen Fühler frei aufwärts bewegen und frei nach allen Seiten schwingen.

Wendet man sich nun dem Tragring und den in Fig. 4 dargestellten elektrischen Verbindungen zu, so erkennt man, daß ein Ausrichtkeil 280 den Isolatorring 100 in Umfangsrichtung gegenüber der nach unten gerichteten zylindrischen Achse 284 des Schneidbrennerkopfes 110 ausrichtet. Im Isoliermaterial des Ringes 100 wird eine Klemmschraube 282 angezogen, um den Ring 100 auf der Achse 284 in der gewünschten Stellung festzulegen. Diese Stellung wird sowohl in vertikaler Richtung als auch in Umfangsrichtung so fixiert, daß die unteren Enden 114 aller Fühlelemente sich in einer gemeinsamen horizontalen Ebene befinden, die zu der zu schneidenden Platte parallel ist und einen vorher ausgewählten Abstand d gegenüber dem gewünschten Spalt g hat, wie dies in Fig. 3 dargestellt ist. Der vorher ausgewählte Abstand befindet sich in einem Bereich von 0,05 - 0,30" (0,127 - 0,765 cm) mit einer Toleranz von etwa 0,05" (0,127 cm). Dies ist natürlich die Entladungslänge und wird so eingestellt, daß tatsächlich ein Abstand von d aufrechterhalten wird. Die elektrischen Werte der Corona-Entladung CD werden überwacht, um den vorher ausgewählten Abstand d zu steuern, der der Entladungslänge entspricht. Dieser Abstand ist kleiner als der erwünschte Spalt g, so daß ein Anstoßen der Fühler sofort den Schneidbrenner aufwärts schiebt, ohne daß dessen Spitze 80 gegen die Platte P stößt.

Ein Tesla-Hochspannungsgenerator 310 oder irgendein anderer Ultrahochspannungsgenerator ist an die Leitung 300 angeschlossen und legt eine 10 kV-Spannung über die Leitung 300 an die leitenden Kappen 250, die normalerweise in zwei Armen in Reihe geschaltet sind. Natürlich könnten auch alle Kappen mit der Leitung 300 in Reihe geschaltet sein, ohne ihre elektrische Funktion bei den bevorzugten Ausführungsformen der Erfindung zu verändern. Der Hochspannungsgenerator hat eine meßbare Größe, wie beispielsweise Leistung, Stromstärke oder Spannung, die ein Maß für die Höhe oder Länge der Corona-Entladung CD ist, die zwischen einem der Fühler und dem Werkstück oder der Platte P erscheint. Diese Meßgröße oder elektrische Eigenschaft weist auf die Größe der Corona-Entladung hin und erzeugt in der Leitung 312 ein Signal, das die Länge der gemessenen Entladung anzeigt. Dieses Signal wird als Spannungssignal in eine Leitung 312 zu einem Glimmsensor 313 eingespeist, der ein durch die Leitung 314 angedeutetes Referenzsignal in sich trägt, um die gemessene elektrische Größe in Leitung 312 mit einer durch Leitung 314 dargestellten Referenzgröße zu vergleichen. Durch den Vergleich wird bestimmt, ob der Motor M den Kopf antreiben soll und in welcher Richtung. Dieser Regelvorgang wird durch Auftreten einer Spannung in der Leitung 322 angezeigt. Die Spannung in Leitung 322 steuert einen Standard-Servoverstärker 320 so, daß der Motor M in der gewünschten Vertikalrichtung angetrieben wird, um den Corona-Entladungsabstand d auf einem vorher ausgewählten Wert innerhalb einer vorgeschriebenen Toleranz zu halten. Diese automatische Steuerung des Abstands d wiederum hält den Spalt g innerhalb der gleichen Toleranz. Da die vom Generator 310 erhältliche Leistung nur eine einzige Corona-Entladung erzeugen kann, ist die überwachte Corona-Entladung diejenige, die am Ende desjenigen Fühlelementes auftritt, das der Platte P am nächsten ist. Dies kann sich ändern, während sich die Gruppe der schlenkernden Fühler zusammen mit dem Schneidkopf 10 während des Schneidvorganges bewegt.

Nach einem weiteren Merkmal der Erfindung ist der Fühl- und Regelkreis in einem einzigen Steckmodul 330 untergebracht, dessen einer Ausgang an die Kappen 250 und dessen anderer Ausgang an den Standard-Servoverstärker 320 angeschlossen ist. Der Verstärker kann, falls gewünscht, mit dem Modul 330 zusammengebaut sein. Eine Einstellvorrichtung in der Leitung 314 steuert die gewünschte Höhe der überwachten und aufrechterhaltenen Corona-Entladung, wobei sie den optimalen Spalt g zwischen der Spitze 80 und dem Werkstück während des Schneidvorganges abtastet und regelt. Bei Verwendung eines Steckmoduls 330 ist eine Reparatur des Systems ganz einfach. Die einzelnen Teile des Moduls können so gekapselt sein, daß die im Werk vorgenommenen Einstellungen eine Kontinuität im Arbeitsablauf gewährleisten, ohne daß es besonderer Fachkenntnisse für die Einstellung durch den Benutzer der Schneidvorrichtung bedarf.

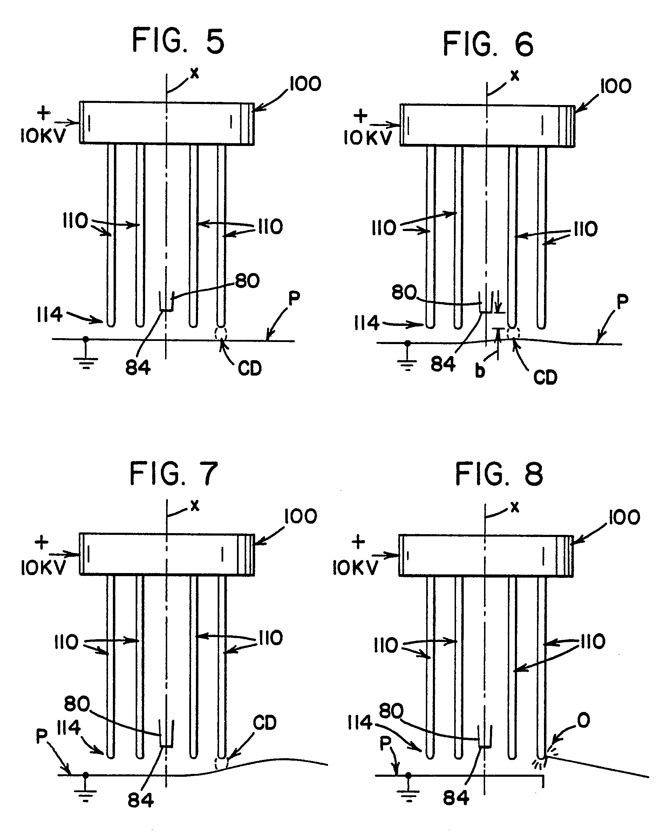

In den Fig. 5 bis 7 ist die Wirkungsweise der vorliegenden Erfindung klar dargestellt. In Fig. 5 hängen die Fühler 110 vom Rahmen 100 herab und bewegen sich über die Oberfläche der Platte P. Unter dem der Platte P am nächsten kommenden Fühler, der sich an der vertikal höchsten Stelle der Platte P befindet, findet eine Corona- oder kontinuierliche Ionen-Entladung CD statt. Bei der Weiterbewegung des Schneidbrenners kann ein anderer Fühler infolge von Verwerfungen oder anderen Oberflächenänderungen der Platte dieser näher kommen. Da nur genügend Strom für eine einzige Corona-Entladung vorhanden ist, wechselt in diesem Fall die Corona-Entladung zu demjenigen Fühler, der neuerdings der Platte am nächsten ist und den geringsten Widerstand bietet, da alle Fühler in bezug auf die Platte P und den Generator 310 elektrisch parallelgeschaltet sind. Gleichzeitig ändert sich das Steuersignal in Leitung 312 drastisch und zeigt einen kleineren Entladungsabstand d an. Dies verursacht ein Signal in der Leitung 322 mit dem Ziel, den Abstand d wieder auf den gewünschten Wert zu bringen. Der Motor M wird im Aufwärtsgang angetrieben, um die gewünschte Abstandslänge d wieder zu erreichen. Dies ändert sofort den Abstand der Spitze 80 gegenüber der Platte, um den Abstand des Fühlers zu steuern, der neuerdings die Corona-Entladung an sich zieht, wie dies in dem Wechsel zwischen den Fig. 5 und 6 dargestellt ist. Zu jeder Zeit wird der Abstand d zwischen dem Ende aller Fühler und dem Ende 84 der Spitze durch die eingestellte Lage des Ringes 100 auf der Achse 284 konstant gehalten.

In Fig. 7 ist eine weitere Fortbewegung des Schneidbrenners dargestellt, wo an der Platte ein anderer Fühler den kürzesten Abstand zwischen seinem Ende und der Platte hat. Es läuft dann der gleiche Prozeß ab, bei dem die Corona-Entladung wieder auf denjenigen Fühler übergeht, der den kleinsten Abstand d hat, und dieser Abstand wird dann von dem Verstärker 320 einreguliert, um den vorher ausgewählten Abstand d auf dem gesteuerten Wert zu halten. Sollte der sich bewegende Induktor einen Fühler 110 an einem Hindernis anstoßen lassen, wie dies in Fig. 8 dargestellt ist, wird der Abstand d Null und die Corona-Entladung geht verloren. Ein sehr kurzer Abstand d hat eine rasche Bewegung des Motors M in einer Vertikalrichtung zur Folge. Man erkennt, daß die Polarität und Größe des Ausgangssignales 324 des Hilfsverstärkers 320 die Geschwindigkeit und die Richtung bestimmt, in der der Motor angetrieben wird. Infolgedessen haben die Korrekturwerte die gleiche Größe wie die von den Fühlern 110 abgetasteten Verhältnisse. Vor Beginn eines Schnittes fährt der Motor M die Fühler abwärts, um die erste Corona-Entladung zur Vorbereitung der Flammenzündung und für den Start der Bewegung der Schneidköpfe längs der Platte P zu erzeugen, die durch Verwendung der vorliegenden Erfindung gesteuert werden soll.

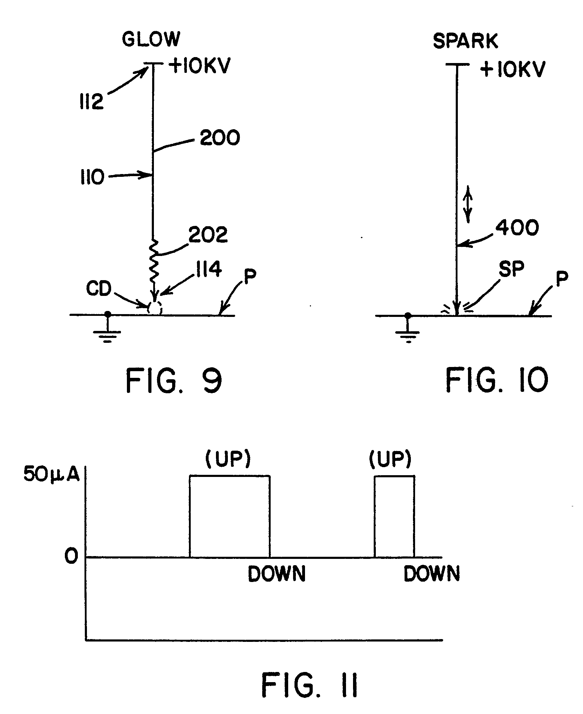

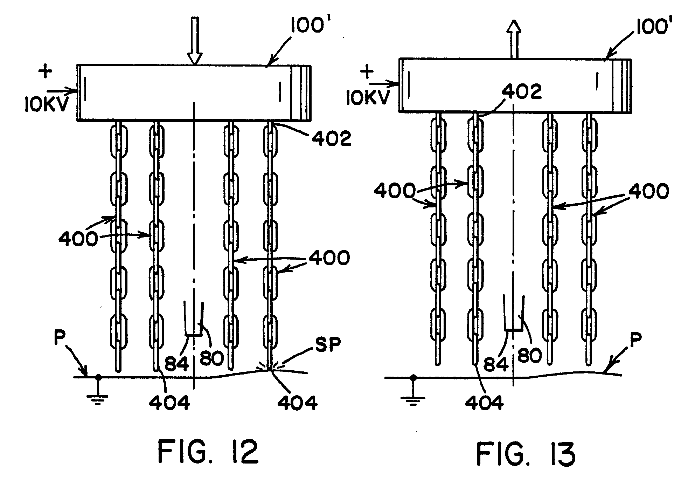

Die Fig. 9 bis 13 zeigen eine Abwandlung der einzelnen Hängefühler und vergleichen die Arbeitscharakteristika mit den Fühlern 110 der zuvor beschriebenen, bevorzugten Ausführungsform. Bei dieser Alternative sind die Fühler keine starren Fühlelemente mit einem in der Nähe ihres Endes eingebauten Widerstand, um dort eine Entladung CD hervorzurufen, wie dies in Fig. 9 gezeigt ist, sondern sie bestehen aus mehreren leitenden Ketten 400, die von einem Ring 100' herabhängen, wie dies am besten in den Fig. 13 und 14 zu erkennen ist. Wenn eine dieser Ketten gegen die Oberfläche der Platte P stößt, entsteht ein Funke SP. Dieser erzeugt ein Signal in der Leitung 312, welches die Stromableitung oder andere elektrische Eigenschaften des Funken anzeigt, der den Verstärker 320 veranlaßt, den Motor M in der Aufwärtsrichtung anzutreiben. Dies hebt das Fühlelement von der Platte ab. In diesem Moment hat das Signal in Leitung 312, wenn es mit einem bekannten Wert oder Signal verglichen wird, nicht den richtigen Wert und erfordert eine Abwärtsbewegung des Motors M; der Rahmen 100' beginnt sich deshalb abzusenken, bis eine andere Kette gegen das Werkstück stößt und wieder eine Aufwärtsbewegung des Schneidbrenners durch Antrieb des Motors in Aufwärtsrichtung hervorruft. Bei dieser besonderen Ausführungsform wird der Funke nicht auf einer kontinuierlichen Basis überwacht. Der Motor M sollte deshalb den Schneidbrenner langsam auf das Werkstück absenken, bis ein Funke erzeugt wird. In diesem Augenblick wird der Schneidbrenner wieder gehoben. Diese oszillierende Bewegung ist in Fig. 11 angedeutet, in der ein Funke als ein Stromfluß oder Leistungsverlust abgetastet wird, der den Motor veranlaßt, den Rahmen 100' aufwärtszubewegen. Nachdem die Aufwärtsbewegung die berührende Kette gelöst hat, wird der Rahmen 100' langsam abgesenkt, bis ein anderer Funken auftritt, der eine Aufwärtsbewegung zur Folge hat. Auf diese Weise gleiten die Ketten im wesentlichen über die Oberfläche der Platte mit intermittierenden Funken dahin und erzeugen eine Aufwärtsbewegung des Schneidbrenners und des vom Schneidbrenner getragenen Rahmens 100'. Hierbei wird der Abstand g automatisch aufrechterhalten, ohne wirklich die Länge einer Glühentladung zu überwachen, welches das bei der bevorzugten Ausführungsform verfolgte Konzept ist. In beiden Fällen wird eine Ultrahochspannung verwendet, welche einen Betrieb unter extrem niedrigen atmosphärischen Bedingungen und im wesentlichen große Wechsel in dem in der Leitung 312 auftretenden Signal erlaubt, dieses mit einem Referenzsignal zu vergleichen für den Antrieb des Motors M, der den gewünschten Arbeitsspalt g für den Schneidkopf aufrechterhält, während sich dieser über die Platte P hinwegbewegt. Zum Halten der Fühler 110 in ihrer vertikalen Lage könnte auch eine leichte Feder Verwendung finden.

## Ansprüche

1. Vorrichtung zum automatischen Steuern des vertikalen Arbeitsspaltes (g) zwischen dem unteren Ende (84) eines Schneidkopfes (10) und einem unter dem Schneidkopf (10) angeordneten, im wesentlichen flachen Werkstück (P), während sich der Schneidkopf (10) und das Werkstück (P) relativ zueinander bewegen und der Schneidkopf sich längs einer vorgegebenen Schneidlinie (B) längs des Werkstückes (P) bewegt, mit einem Antriebsmotor (M) zum Auf- und Abbewegen des Schneidkopfes (10) gegenüber dem Werkstück (P) während der Relativbewegung, **gekennzeichnet durch** folgende Merkmale:

a) mehrere langgestreckte Fühlelemente (110 bzw. 400), die von dem Schneidkopf (10) vertikal nach unten in Richtung auf das Werkstück (P) herabhängen und je ein oberes Ende (112) und ein unteres Ende (114) aufweisen;

b) eine Tragvorrichtung (100) zum Aufhängen der Fühlelemente (110 bzw. 400) an ihren oberen Enden (112) an Stellen, die im Winkelabstand voneinander um den Schneidkopf (10) herum sich befinden derart, daß die unteren Enden (14) der Fühlelemente sich gegenüber dem unteren Ende (84) des Schneidkopfes (10) auf der gleichen vertikalen Höhe befinden;

c) eine Einrichtung, die eine freie Aufwärtsbewegung der unteren Enden (114) der Fühlelemente gestattet, wenn diese dem Werkstück (P) zu nahe kommen;

d) eine selbsttätige Regeleinrichtung, die den Motor (M) in einer ersten Richtung antreibt, um den Schneidkopf (10) vom Werkstück fort nach oben zu bewegen und in eine zweite Richtung antreibt, um den Schneidkopf abwärts in Richtung auf das Werkstück (P) zu bewegen und hierdurch den Arbeitsspalt (g) auf einem vorher ausgewählten Wert zu halten, wobei die selbsttätige Regeleinrichtung eine Sensoreinrichtung aufweist, um alle Fühlelemente (110) im Abstand vom Werkstück (P) zu halten, während das untere Ende (114) eines Fühlelementes (110, 400) in einem vorher ausgewählten Abstand (d) von dem Werkstück (P) gehalten wird.

2. Vorrichtung nach Anspruch 1, **dadurch gekennzeichnet,** daß die Sensoreinrichtung ein Element zum Anlegen einer ultrahohen Spannung zwischen den Fühlelementen (110, 400) und dem Werkstück (P) aufweist.

3. Vorrichtung nach Anspruch 1 oder 2, **dadurch gekennzeichnet,** daß die angelegte Spannung etwa 2 bis 5 Kilovolt (KV) übersteigt.

4. Vorrichtung nach einem der Ansprüche 1 bis 3, **dadurch gekennzeichnet,** daß die Sensoreinrichtung eine Meßvorrichtung zum Messen einer elektrischen Größe aufweist, die zwischen einem Fühlelement (110) und dem Werkstück (P) auftritt, daß ein Komparator (313, 314) zum Vergleichen des gemessenen Wertes mit einem Referenzzustandswert vorgesehen ist und daß Betätigungsmittel vorgesehen sind, die die selbsttätige Regeleinrichtung in Gang setzen, um den Motor in einer von beiden Richtungen anzutreiben, bis der gemessene Wert sich in einem vorher bestimmten Verhältnis zu dem Referenzzustandswert befindet.

5. Vorrichtung nach einem der Ansprüche 1 bis 4, **da durch gekennzeichnet,** daß die elektrische Größe eine Leistung ist.

6. Vorrichtung nach einem der Ansprüche 1 bis 4, **dadurch gekennzeichnet,** daß die elektrische Größe die Stromstärke ist.

7. Vorrichtung nach einem der Ansprüche 1 bis 4, **dadurch gekennzeichnet,** daß die elektrische Größe die Spannung ist.

8. Vorrichtung nach einem der Ansprüche 1 bis 7, **dadurch gekennzeichnet,** daß jedes Fühlelement (110) einen in der Nähe seines unteren Endes (114) angeordneten Widerstand (202) aufweist und daß die elektrische Größe eine aufrechterhaltene, ionisierte Entladung zwischen einem Fühlelement (110) und dem Werkstück (P) ist.

9. Vorrichtung nach einem der Ansprüche 1 bis 4, **dadurch gekennzeichnet,** daß die elektrische Größe eine Funkenentladung ist.

10. Vorrichtung nach Anspruch 9, **dadurch gekennzeichnet,** daß der vorher ausgewählte Abstand im wesentlichen Null ist.

11. Vorrichtung nach einem der Ansprüche 1 bis 8, **dadurch gekennzeichnet,** daß der vorher ausgewählte Abstand einen Wert in der Größenordnung von 0,05 bis 0,30 Zoll hat.

12. Vorrichtung nach Anspruch 11, **dadurch gekennzeichnet,** daß der vorher ausgewählte Abstand einen Toleranzbereich von ± 0.050 Zoll hat.

13. Vorrichtung nach einem der Ansprüche 1 bis 12, **dadurch gekennzeichnet,** daß das untere Ende (84) des Schneidkopfes (10) mit einer vertikalen Achse (x) fluchtet und daß die Fühlelemente (110 bzw. 400) in einem vorgegebenen radialen Abstand (a) von dieser Achse (x) angeordnet sind.

14. Vorrichtung nach einem der Ansprüche 1 bis 13, **dadurch gekennzeichnet,** daß die Fühlelemente (110) um den Schneidkopf (10) herum im Umfangsabstand voneinander angeordnet sind.

15. Vorrichtung nach einem der Ansprüche 1 bis 14, **dadurch gekennzeichnet,** daß die Fühlelemente (110) in Umfangsrichtung einen vorgegebenen Winkelabstand voneinander haben.

16. Vorrichtung nach einem der Ansprüche 1 bis 15, **dadurch gekennzeichnet,** daß mindestens drei Fühlelemente (110, 400) vorgesehen sind.

17. Vorrichtung nach einem der Ansprüche 1 bis 16, **dadurch gekennzeichnet,** daß jedes Fühlelement ein langgestrecktes, leitendes Teil (200 bzw. 400) aufweist, das sich vom oberen Ende (112) des Fühlelementes bis zu dessen unterem Ende (114) erstreckt.

18. Vorrichtung nach einem der Ansprüche 1 bis 17, **dadurch gekennzeichnet,** daß das langgestreckte leitende Element in Querrichtung flexibel und in Axialrichtung starr ist und ein sein Gewicht aufnehmendes Teil aufweist und vertikal frei herabhängt.

19. Vorrichtung nach einem der Ansprüche 1 bis 17, **dadurch gekennzeichnet,** daß das langgestreckte leitende Element eine Kette (400) ist, d Befestigungsmittel zum Befestigen des oberen Endes (402) der Kette in der genannten Lage an der Tragvorrichtung (100) aufweist.

20. Vorrichtung nach einem der Ansprüche 1 bis 18, **dadurch gekennzeichnet,** daß das Fühlelement (110) ein im wesentlichen starres Element ist und daß Mittel vorgesehen sind, die dem oberen Ende (112) des starren Elementes (110) erlauben, sich gegenüber der Tragvorrichtung (100) vertikal aufwärts und quer hin- und her zu bewegen.

21. Vorrichtung nach einem der Ansprüche 1 bis 20, **dadurch gekennzeichnet,** daß in der Nähe des unteren Endes des starren Elementes ein Widerstand (202) angeordnet ist.

22. Vorrichtung nach einem der Ansprüche 1 bis 21, **dadurch gekennzeichnet,** daß die Sensoreinrichtung eine Hochspannungsvorrichtung aufweist, mit der eine ultrahohe Spannung zwischen den Fühlelementen und dem Werkstück angelegt werden kann und daß die Hochspannungseinrichtung die Fühlelemente parallel verbindet.

23. Vorrichtung nach Anspruch 22, **dadurch gekennzeichnet,** daß die Hochspannungseinrichtung eine Kapazitätsleistung aufweist, die ausreicht, nur eine einzige ionisierte Entladung zwischen einem der Fühlelemente und dem Werkstück aufrechtzuerhalten.

24. Verfahren zum automatischen Steuern des vertikalen Arbeitsspaltes (g) zwischen dem unteren Ende (84) eines Schneidkopfes (10) und einem unter dem Schneidkopf angeordneten, im wesentlichen flachen Werkstücks (P), während sich

11

Schneidkopf (10) und Werkstück (P) relativ zueinander bewegen und der Schneidkopf längs einer vorgegebenen Schneidlinie sich über das Werkstück bewegt und ein Antriebsmotor den Schneidkopf gegenüber dem Werkstück während der Relativbewegung auf- und abbewegt, **gekennzeichnet durch** folgende Merkmale:

a) Herabhängenlassen von mehreren, langgestreckten Fühlelementen (110 bzw. 400) von dem Schneidkopf (10) in Richtung auf das Werkstück (P), wobei jedes Fühlelement (110) ein oberes Ende (112) und ein unteres Ende (114) aufweist;

b) Anhängen der Fühlelemente (110 bzw. 400) mit ihren oberen Enden (112) im Winkelabstand rund um den Schneidkopf (10), wobei die unteren Enden (114) sich alle gegenüber dem unteren Ende (84) des Schneidkopfes (10) auf der gleichen vertikalen Höhe befinden;

c) Zulassen einer freien Aufwärtsbewegung der unteren Enden (114 bzw. 404) der Fühlelemente (110 bzw. 400), wenn diese gegen das Werkstück (P) stoßen;

d) Antreiben des Motors in einer ersten Richtung, um den Schneidkopf (10) vom Werkstück (P) weg aufwärts zu bewegen und Antreiben des Motors in einer zweiten Richtung abwärts in Richtung auf das Werkstück (P) hin, um den Arbeitsabstand auf einem vorher ausgewählten Wert zu halten und

e) Halten aller Fühlelemente (110 bzw. 400) im Ab stand vom Werkstück (P), während das untere Ende eines der Fühlelemente (110) in einem vorbestimmten Abstand vom Werkstück (P) gehalten wird, wobei der Arbeitsspalt auf einem vorher bestimmten Wert gehalten wird.

25. Vorrichtung nach einem der Ansprüche 1 bis 24, **dadurch gekennzeichnet,** daß der Schneidkopf ein Flammenschneidbrenner ist.

26. Fühlelement zur Verwendung in einem Ultrahochspannungsgerät zum Steuern des Arbeitsspaltes (g) zwischen einem Schneidkopf (10) und einer zu schneidenden Platte (P) **dadurch gekennzeichnet,** daß das Fühlelement (110) ein langgestrecktes, elektrisch leitendes Element (200 bzw. 400) und eine Vorrichtung (230) an seinem einen Ende aufweist, mit der das leitende Element an einem Träger (100) befestigt werden kann und daß das Fühlelement am anderen Ende ein Element aufweist, welches einen Strom von einem Ultrahochspannungsgenerator (310) von diesem Element (200 bzw. 400) auf die Platte (P) leitet und daß jedes Fühlelement ein elektrisch leitendes Teil (200) aufweist, das sich vom oberen Ende (112) zum unteren Ende (114) des Fühlelementes erstreckt und daß Mittel (230, 252) vorgesehen sind, welche dem oberen Ende (112) des starren Elementes (200) erlauben, sich in vertikaler Richtung zu bewegen und gegenüber der Tragvorrichtung (100) in Querrichtung hin- und her zu schwingen.

27. Vorrichtung nach einem der Ansprüche 1 bis 26, **dadurch gekennzeichnet,** daß das Fühlelement in Querrichtung biegsam und in Axialrichtung starr ist und ein Gewicht aufweist, welches das Fühlelement in einer vertikal nach unten hängenden Lage hält.

28. Vorrichtung nach einem der Ansprüche 1 bis 27, **dadurch gekennzeichnet,** daß das Fühlelement eine Kette ist, die mit einer Befestigungsvorrichtung am oberen Ende an der Tragvorrichtung (100) befestigt ist.

FIG. I

# FIG. 2

## FIG. 3

FIG. 4

FIG. 5

FIG. 6

FIG. 7

FIG. 8

GLOW

+10KV

112

200

110

202

114

CD

P

FIG. 9

SPARK

+10KV

400

SP

P

FIG. 10

50μA

(UP)

(UP)

0

DOWN

DOWN

FIG. 11

FIG. 12

FIG. 13

**Europäisches Patentamt**

**EUROPÄISCHER RECHERCHENBERICHT**

Nummer der Anmeldung

## EINSCHLÄGIGE DOKUMENTE

EP 88112199.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE – B – 1 948 562 (WSESOJUSNYJ)<br>* Ansprüche; Fig. 1 *<br><br>-- | 1,14–16,25 | B 23 K 7/10 |
| A | DE – B – 1 279 814 (THE BRITISH OXYGEN)<br>* Fig. 2 *<br><br>-- | 1,5–7 | |
| A | DE – A1 – 2 744 362 (MESSER GRIESHEIM)<br>* Ansprüche *<br><br>-- | 5–7 | |
| A | EP – A1 – 0 199 937 (MESSER)<br>* Fig. 2 *<br><br>-- | 5–7 | |
| A | US – A – 4 328 049 (RICHARDSON)<br>* Fig. 1 *<br><br>-- | 5–7 | RECHERCHIERTE SACHGEBIETE (Int. Cl.4) |
| A | DD – A – 149 034 (ZENTRALINST.)<br>* Ansprüche *<br><br>-- | 5–7 | B 23 K 7/00<br>B 23 K 9/00 |
| A | US – A – 4 400 610 (MURAKAMI)<br>* Fig. 1 *<br><br>-- | 1,5–7 | |
| A | GB – A – 1 414 437 (CATER PILLAR)<br>* Fig. 1 *<br><br>---- | 1,5–7,24,26 | |

Der vorliegende Recherchenbericht wurde für alle Patentansprüche erstellt.

| Recherchenort | Abschlußdatum der Recherche | Prüfer |
|---|---|---|
| WIEN | 14-11-1988 | BENCZE |